(19) Europäisches Patentamt

European Patent Office

Office européen des brevets

(11) Publication number: **0 431 857 A2**

## (12) EUROPEAN PATENT APPLICATION

(21) Application number: **90313080.5**

(22) Date of filing: **03.12.90**

(51) Int. Cl.⁵: **G11B 5/64, G11B 5/85**

(30) Priority: **06.12.89 JP 315404/89**

(43) Date of publication of application:
**12.06.91 Bulletin 91/24**

(84) Designated Contracting States:
**DE FR GB**

(71) Applicant: **Hitachi Maxell Ltd.**
**1-88, Ushitora-1-chome, Ibaraki-shi**
**Osaka-fu(JP)**

(72) Inventor: **Kitakami, Osamu**
**20-2, Kubogaoka 4-chome, Moriyamachi**
**Kitasoma-gun, Ibaraki-ken(JP)**
Inventor: **Mizushima, Kunio**
**5-4, Matsushiro 4-chome**
**Tsukuba-shi(JP)**

(74) Representative: **Williams, Trevor John et al**
**J.A. KEMP & CO. 14 South Square Gray's Inn**
**London WC1R 5LX(GB)**

(54) **Vertical magnetic recording medium and method of manufacturing the same.**

(57) Disclosed are a vertical magnetic recording medium, which comprises a non-magnetic substrate on which a magnetic layer having vertical magnetic anisotropy is formed, wherein the magnetic layer has a normalized output in reproduction (a reproduction output per a unit magnetic head track width, a unit relative speed between a magnetic head and a magnetic recording medium, and a unit number of turns of the wire of the magnetic head) of 0.2 [$\mu$Vp - p/$\mu$m $\cdot$ m/sec $\cdot$ turn] or more in a low recording density region in which a wavelength is 5 micro meters or more, the maximum value of a normalized output which exists in a high recording density region in which a recording wavelength is 2.5 micro meters or less; and a ratio of the maximum value (Emax) to a normalized output value (Eo) (Emax/Eo) at a recording wavelength of 50 micro meters which is regulated in a range exceeding 1 and equal to or less than 1.5 and a method of manufacturing the same.

F I G. I

**VERTICAL MAGNETIC RECORDING MEDIUM AND METHOD OF MANUFACTURING THE SAME**

BACKGROUND OF THE INVENTION
Technical Field of the Invention

The present invention relates to a vertical magnetic recording medium composed of a non-magnetic substrate on which a magnetic layer having vertical magnetic anisotropy is formed and a method of manufacturing the same.

Recently, a request for a technology of high recording density is increased, and to cope with the request, studies and developments of the high recording density have been actively carried out in the various fields of magnetic recording, optical recording, and semiconductor memories. In particular, in the field of the magnetic recording medium, a vertical magnetic recording system attracts attention as one of promising high density recording technologies in future.

Prior Art

Vertical magnetic recording media used in the vertical magnetic recording system include, for example, a vertical magnetic recording medium composed of a non-magnetic substrate of a polyimide film or the like on which a magnetic layer composed of Co-Cr alloy and having vertical magnetic anisotropy is formed by a batch system.

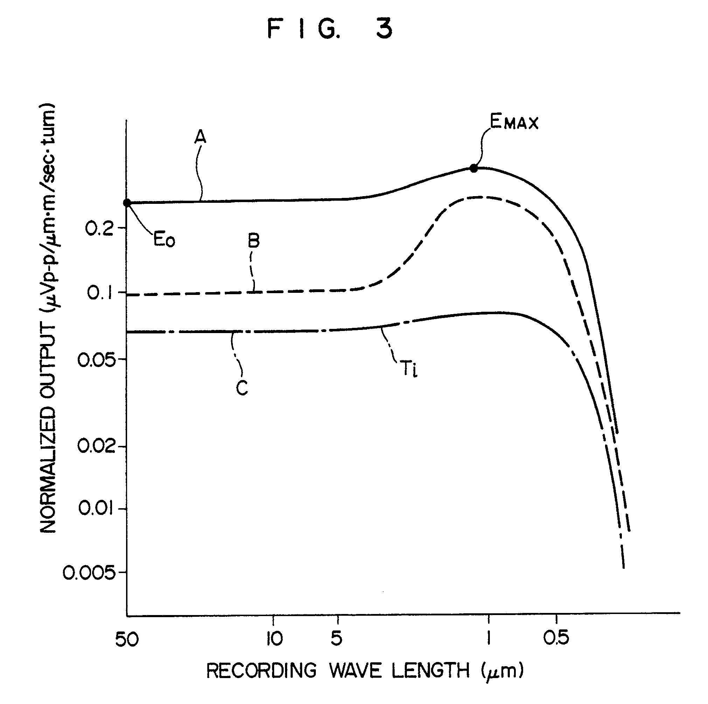

This vertical magnetic recording medium, however, has a reproducing characteristics as shown in the curve B of Figure 3. Figure 3 is a characteristic diagram with a horizontal axis representing a recording wavelength and a vertical axis representing a normalized output in reproduction. The normalized output is defined as a reproduction output per a unit track width, a unit relative speed, and unit number of turns, represented by a value obtained by dividing a reproduction output [$\mu$Vp - p] by the track width [$\mu$m] of a magnetic head, a relative speed [m/sec] between the magnetic head and the magnetic recording medium, and the number of turns of the wire of the magnetic head [turn], and has a unit of [$\mu$Vp - p/$\mu$m ° m/sec ° turn]. The normalized output is generally used to evaluate a performance independent of a specification of the magnetic head and measuring conditions.

As shown in the curve B of Figure 3, the prior art vertical magnetic recording medium made by the above conventional batch system has substantially a stationary normalized output in a low recording density region in which a recording wavelength is 5 micro meters or more, but the normalized reproduction output is abruptly increased in a high recording density region in which a wavelength is 2.5 micro meters or less. And, the curve B has a peak value (maximum value) in the vicinity of 0.6 micro meter corresponding to the central wavelength of a brightness signal.

In the case that the normalized reproduction output has an abrupt peak as shown above, a constant reproduction output cannot be obtained, an output is greatly dispersed, and a resolution is lowered where a magnetic recording medium does not well match with a recording/reproducing apparatus, and thus a problem arises in reliability. Further, a trial to make the dispersion of the production output smaller is encountered with a difficulty in that the circuit of the recording/reproducing apparatus must be strictly designed.

To solve these problems, there is a trial that an underlayer is composed of a Ti film and a magnetic layer composed of a Co-Cr alloy film is formed on the underlayer. The recording density characteristics of a normalized reproduction output of the magnetic recording medium as arranged above is shown in the curve C of Figure 3.

The provision of the underlayer composed of the Ti film enables the magnetic recording medium to have stable output characteristics in both the low and high recording density regions with a flattened curve without such an abrupt peak as in the curve B. This magnetic recording medium, however, is not always satisfactory, because it has a lower normalized reproduction output over the entire region than that of the curve B.

SUMMARY OF THE INVENTION

An object of the present invention is to overcome the disadvantages of prior art and provide a vertical magnetic recording medium having excellent magnetic characteristics and a method of manufacturing the same.

To achieve the above object, according to the present invention, there is provided a vertical magnetic recording medium, which comprises:

a non-magnetic substrate on which a magnetic layer having vertical magnetic anisotropy is formed, wherein the magnetic layer having:

a normalized output in reproduction (a reproduction output per a unit magnetic head track width, a unit relative speed between a magnetic head and a magnetic recording medium, and a unit number of turns of the wire of the magnetic head) of 0.2 [$\mu$Vp - p/$\mu$m $\cdot$ m/sec $\cdot$ turn] or more in a low recording density region in which a wavelength is 5 micro meters or more;

the maximum value of a normalized output which exists in a high recording density region in which a recording wavelength is 2.5 micro meter or less; and

a ratio of the maximum value (Emax) to a normalized output value (Eo) (Emax/Eo) at a recording wavelength of 50 micro meters which is regulated in a range exceeding 1 and equal to or less than 1.5.

To achieve the above object, according to the present invention, there is further provided a method of manufacturing a vertical magnetic recording medium, which comprises the step of:

depositing and forming a magnetic layer having vertical magnetic anisotropy on a non-magnetic substrate to a predetermined thickness by a continuous vapor deposition method, wherein the magnetic layer having:

a normalized output in reproduction (a reproduction output per a unit magnetic head track width, a unit relative speed between a magnetic head and a magnetic recording medium, and a unit number of turns of the wire of the magnetic head) of 0.2 or more [$\mu$Vp - p/$\mu$m $\cdot$ m/sec $\cdot$ turn] in a low recording density region in which a wavelength is 5 micro meters or more;

the maximum value of a normalized output which exists in a high recording density region in which a recording wavelength is 2.5 micro meters or less; and

a ratio of the maximum value (Emax) to a normalized output value (Eo) (Emax/Eo) at a recording wavelength of 50 micro meters which is regulated in a range exceeding 1 and equal to or less than 1.5.

With the above-mentioned arrangement, the present invention can easily provide a vertical magnetic recording medium having excellent magnetic characteristics without a dispersion of performance.

## BRIEF DESCRIPTION OF DRAWINGS

Figure 1 is a schematic arrangement of a continuous vapor deposition apparatus used in an embodiment according to the present invention;

Figure 2 is an enlarged cross sectional view of a vertical magnetic recording medium obtained by the continuous vapor deposition apparatus; and

Figure 3 is a characteristic curve showing the relationship between a recording wavelength and a normalized reproduction output.

## DETAILED DISCUSSION

Next, an embodiment of the present invention will be described below with reference to drawings.

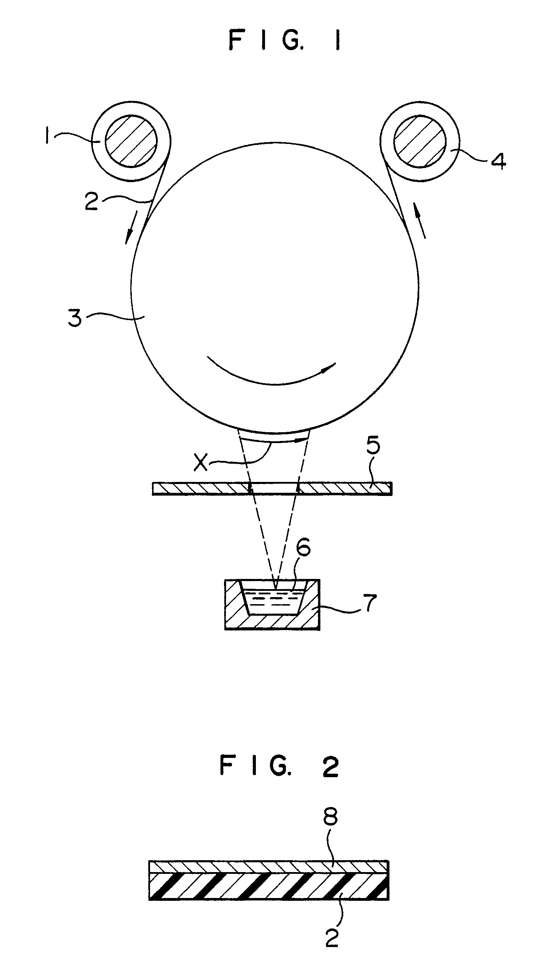

First, an arrangement of a continuously winding and vapor depositing apparatus used in the embodiment of the present invention will be described with reference to Figure 1.

The interior of the vapor deposition apparatus is in an inert atmosphere containing argon or the like or an atmosphere containing oxygen of a predetermined concentration in addition to the argon.

In Figure 1, 1 designates an unwinding roller, 2 designates a substrate as a base film, a glass disk or an aluminum disk having a surface having been subject to a glow discharge treatment as described below, 3 designates a can kept at a predetermined temperature and rotated at a predetermined speed, 4 designates a winding roller, 5 designates a slit plate for regulating a vapor deposition angle, 6 designates a melted metal composed of a desired alloy to be vapor deposited on the above substrate 2, and 7 designates a crucible for accommodating the melted metal 6.

As shown in Figure 1, the substrate 2 having been subject to the glow discharge treatment is continuously unwound from the unwinding roller 1 and wound around the can 3. The surface of the can 3 is kept at the predetermined temperature and the substrate 2 moves together with the can 3. When the substrate 2 reaches the vicinity of the slit plate 5, the metal particles from the melted metal 6 are continuously deposited on the substrate 2 in the vapor deposition area thereof regulated by the slit plate 5, and finally a magnetic layer 8 having a predetermined thickness is formed, as shown in Figure 2. The thus sequentially deposited portion of the substrate 2 is subsequently wound around the winding roller 4.

A heat resistant film of synthetic resin such as, for example, polyimide, polyester or the like is used as the above substrate 2. The surface of the substrate 2 on which the magnetic layer 8 is to be formed is subject to the glow discharge treatment in a preprocess so that adherence of the magnetic layer to the substrate is increased. An example of the conditions of the glow discharge treatment is as follows.

| Frequency | 50 [Hz] |
|---|---|
| Imposed Power | 60 [W] |
| Treatment Atmosphere | Argon Gas Atmosphere $5 \times 10^{-4}$ [Torr] |
| Treatment Time | 3 [sec] |
| Electrode | Tantalum |

Cobalt, cobalt-chromium alloy, cobalt-iron alloy, or the like, for example, is used as a vapor deposition material for forming the magnetic layer. Then, the magnetic layer 8 of cobalt-chromium alloy or metal oxide such as cobalt-oxygen or cobalt-iron-oxygen is deposited on the substrate. The latter is fabricated by introducing oxygen gas into the deposition atmosphere.

Although a theoretical basis is not yet found, it has been found that in the present invention using the apparatus described above as an example, when a magnetic layer composed of the above-mentioned materials is directly formed on a substrate omitting an underlayer to be interposed therebetween by a continuous winding vapor deposition method, a magnetic recording medium can be obtained which has a normalized output in reproduction of 0.2 [$\mu$Vp - p/$\mu$m. m/sec ° turn] or more in a low recording density region in which a recording wavelength is 5 micro meters or more and the maximum value of a normalized output in a high recording density region in which a recording wavelength is 2.5 micro meters or less.

Next, a so-called ring type magnetic head is used to record a signal to or reproduce the same from the magnetic recording medium of the present invention. This magnetic head includes a ferrite head or a metal-in-gap type head, thin film head and the like provided with a magnetic film (e.g., Co base amorphous alloy, sendust, Permalloy) having a highly saturated magnetic density flux at least in the vicinity of the magnetic gap in the core. A high reproduction sensitivity can be maintained by using this type of the head. Note that a gap length of the ring head is preferably within a range from 0.1 to 0.5 micro meter to make use of the excellent high density recording performance of the vertical magnetic recording medium. When a gap length of the ring head is 0.5 micro meter or more, a resolution is insufficient when a signal is reproduced, whereas when it is less than 0.1 micro meter, a signal cannot be sufficiently recorded.

In the above example, an Emax/Eo value is controlled by controlling a can temperature of the substrate when vapor deposition is carried out, but the Emax/Eo value can be also controlled by controlling, for example, a degree of vacuum when the vapor deposition is carried out.

In this stage, the temperature of the substrate is substantially equal to the can temperature.

In the vertical magnetic recording medium of the present invention, a protective layer may be formed on the magnetic layer, as necessary.

Example

A vertical magnetic recording medium was continuously made using Co-Cr alloy (Co: 81 at%, Cr: 19 at%) and polyimide film of 30 micro meters thick by the above continuous vapor deposition apparatus at a degree of vacuum in a vapor deposition atmosphere of $2 \times 10^5$ Torr, a constant film forming speed of 0.3 $\mu$m/sec, and respective can temperatures shown in Table 1.

A thus made base material of the magnetic recording medium was punched out to a disk having a size of 3.5 inches and a magnetic disk cartridge was assembled by a usual method.

The magnetic disk cartridges of respective specimens were mounted on a recording/reproducing apparatus, and recording/reproducing characteristics were evaluated using a composite magnetic head of Co-Nb-Zr amorphous alloy and ferrite having a gap length of 0.21 micro meter. Table 1 shows the result of the evaluation.

In Table 1, a ratio of Emax to Eo, Emax/Eo was determined assuming that a normalized output at a recording wavelength of 50 micro meters was represented by Eo [$\mu$Vp - p/$\mu$m ° m/sec ° turn] and the

4

maximum value of an output in a region of a recording wavelength equal to or less than 25 micro meters was represented by Emax [$\mu$Vp - p/$\mu$m $\cdot$ m/sec $\cdot$ turn].

## Table 1

| Specimen No. | Can Temperature ($^\circ$C) | Eo | Emax/Eo |
|---|---|---|---|
| 1 | 320 | 0.18 | 1.0 |
| 2 | 280 | 0.20 | 1.1 |
| 3 | 250 | 0.22 | 1.2 |
| 4 | 230 | 0.25 | 1.4 |
| 5 | 205 | 0.21 | 1.5 |
| 6 | 140 | 0.19 | 2.0 |

The respective specimens were mounted on a video floppy apparatus and color quality and image resolution thereof were evaluated. Note that the central frequency of a color signal was 1.25 MHz and the central frequency of a brightness signal was 9 MHz. Table 2 shows the result of the evaluation.

## Table 2

| Specimen No. | Color Quality | Resolution |
|---|---|---|
| 1 | good | bad |
| 2 | excellent | excellent |
| 3 | excellent | excellent |
| 4 | excellent | excellent |
| 5 | excellent | excellent |
| 6 | bad | good |

As apparent from Table 2, the specimens (Specimens No. 2 - 5) having an Emax/Eo value exceeding 1 and equal to or less than 1.5 are excellent in both color quality and resolution and can provide distinct color when they are applied to analog image recording.

The curve A in Figure 3 is a characteristic curve of the magnetic recording medium of the embodiment according to the present invention. The magnetic recording medium used a polyimide film as a base film and was subject to a glow discharge treatment under the same conditions as described above. The magnetic layer of the magnetic recording medium was composed of Co-Cr alloy (Co: 81 at%, Cr: 19 at%) and had a film thickness of 0.3 micro meter. The magnetic layer was continuously deposited under the conditions of a can temperature of 230$^\circ$C, a degree of vacuum of 3 x 10$^{-5}$ Torr, and a film forming speed of 0.18 $\mu$m/sec. As shown in Figure 3, the magnetic recording medium has a normalized output Eo of 0.25 [$\mu$Vp - p/$\mu$m $\cdot$ m/sec $\cdot$ turn] at a recording wavelength of 50 micro meters, the maximum value Emax of an output of 0.33 [$\mu$Vp - p/$\mu$m $^\circ$ m/sec $^\circ$ turn] in a region of a recording wavelength equal to or less than 2.5 micro meter, and an Emax/Eo value of 1.3.

## Claims

1. A vertical magnetic recording medium, comprising:
a non-magnetic substrate on which a magnetic layer having vertical magnetic anisotropy is formed, wherein said magnetic layer having:
a normalized output in reproduction (a reproduction output per a unit magnetic head track width, a unit relative speed between a magnetic head and a magnetic recording medium, and a unit number of turns of the wire of said magnetic head) of 0.2 [$\mu$Vp - p/$\mu$m $^\circ$ m/sec $^\circ$ turn] or more in a low recording density region in which a wavelength is 5 micro meters or more;
the maximum value of a normalized output which exists in a high recording density region in which a recording wavelength is 2.5 micro meters or less; and
a ratio of said the maximum value (Emax) to a normalized output value (Eo) (Emax/Eo) at a recording wave-length of 50 micro meters which is regulated in a range exceeding 1 and equal to or less than 1.5.

2. A vertical magnetic recording medium according to claim 1, wherein said magnetic layer contains alloy mainly composed of cobalt-chromium or metal oxide mainly composed of cobalt-oxygen or cobalt-iron-oxygen.

3. A vertical magnetic recording medium according to claim 1 or 2, wherein said magnetic layer is directly formed on said substrate.

4. A method of manufacturing a vertical magnetic recording medium, comprising the step of:
depositing and forming a magnetic layer having vertical magnetic anisotropy on a non-magnetic substrate to a predetermined thickness by a continuous winding vapor deposition method, wherein said magnetic layer having:
a normalized output in reproduction (a reproduction output per a unit magnetic head track width, a unit relative speed between a magnetic head and a magnetic recording medium, and a unit number of turns of the wire of said magnetic head) of 0.2 [$\mu$Vp - p/$\mu$m $^\circ$ m/sec $^\circ$ turn] or more in a low recording density region in which a wavelength is 5 micro meters or more;
the maximum value of a normalized output which exists in a high recording density region in which a recording wavelength is 2.5 micro meters or less; and
a ratio of said the maximum value (Emax) to a normalized output value (Eo) (Emax/Eo) at a recording wave-length of 50 micro meters which is regulated in a range exceeding 1 and equal to or less than 1.5.

5. A method of manufacturing a vertical magnetic recording medium according to claim 4, wherein said magnetic layer contains alloy mainly composed of cobalt-chromium or metal oxide mainly composed of cobalt-oxygen or cobalt-iron-oxygen.

6. A method of manufacturing a vertical magnetic recording medium according to claim 4 or 5, characterized in forming said magnetic layer directly on said substrate.

7. A method of manufacturing a vertical magnetic recording medium according to claim 4, 5 or 6, characterized in applying glow discharge treatment to the surface of said substrate on which said magnetic layer is to be formed.

# F I G. 1

# F I G. 2

F I G. 3